# EUROPEAN PATENT SPECIFICATION

(11) **EP 4 012 215 B1**
(45) Date of publication and mention of the grant of the patent: **16.04.2025**
(21) Application number: 20212870.8
(22) Date of filing: 09.12.2020
(51) Int. Cl.: F16D 55/224, F16D 65/18, F16D 66/02

(54) **DISK BRAKE ASSEMBLY**
SCHEIBENBREMSENANORDNUNG
ENSEMBLE DISQUES DE FREIN

(43) Date of publication of application: 15.06.2022
(73) Proprietor: KNORR-BREMSE Systeme für Schienenfahrzeuge GmbH, 80809 München (DE)
(72) Inventor: Balázs, Liktor, 1096 Budapest (HU)
(74) Representative: Hartig, Michael

(56) References cited:
- EP-A1- 3 412 528
- US-A1- 2019 351 889
- US-A1- 2020 307 530

## Description

The invention relates to a disk brake assembly for a rail car, in particular an unpowered rail car, such as a tank wagon or cargo wagon.

Conventional rail car disk brake systems include a plurality of brake pads, a caliper coupled with the brake pads for pressing the brake pads against brake disks firmly attached to the rail car's wheel when the assembly is shifted to a braking position, and a pneumatically-operated brake cylinder that, when actuated, shifts the assembly to its braking position.

EP 1 798 439 discloses a wear detector for brake pads. The wear detector gives notice of wear when the electrical circuit of the device is closed. The wear detector comprises a T-shaped body. The two opposing arms of the body are connected in a groove that is provided in the friction material of the brake shoe or pad, while the central portion thereof forms the element that comes into contact with the brake disk when the friction material of the associated shoe or pad is worn. The wear detector is prone to failure because of the connection of the T-shaped body to a sensor hub, and the T-shaped body may damage the brake disk.

Document US2019/351889A1 discloses a disk brake assembly comprising sensors for real-time detection of signals relating to temperatures and/or to normal forces and/or to shear forces and/or wear.

It is an object of the invention to provide a disk brake assembly, in particular for an unpowered tank or cargo wagon, that solves the disadvantages of the prior art, in particular to provide a disk brake assembly with a sensor for reliably monitoring for extended periods of time in a particularly energy-efficient manner.

This object is solved by the subject matter of independent claim 1. Accordingly, a disk brake assembly for a rail car is provided, in particular for an unpowered trail car, preferably a tank wagon or a cargo wagon. A cargo wagon may be an unpowered cargo wagon, and said monitoring system is preferably mounted entirely on an unpowered cargo wagon. opposite sides of a brake disk coupled to a rail car rotor. The rotor may be a wheel or an axle to which the brake disk is attached. The brake disk may be is rigidly attached to the rail car wheel or axle so that the brake disk stops or rotates together with the corresponding wheel. The brake assembly further includes a piston actuator, preferably at pneumatic or hydraulic piston actuator, for driving the brake assembly, and a caliper for transferring a braking force from the actuator to the brake pads. The caliper may comprise moveable components and stationary components with respect to the railroad car chassis. The caliper preferably consists of moveable components. The disk brake assembly is actuated by the actuator. In particular, the actuator comprises a brake cylinder and a piston. The actuation is based on compressed air for a pneumatic actuator. Alternatively, the assembly includes a hydraulic actuator using a hydraulic actuating fluid, such as oil, to provide pressure for the hydraulic actuator.

The disk brake assembly also includes at least one sensor device for measuring at least one parameter of the brake assembly. A parameter of the brake assembly may include but is not limited to a parameter related to brake wear. Additionally or alternatively, a parameter of the brake assembly may be related to the flow and/or pressure of the hydraulic or pneumatic actuating fluid of the actuator. The brake assembly may include one or more further sensor devices for measuring one or more other parameters of the brake assembly, wherein the further sensor devices may include an accelerometer, a temperature sensor, a moisture sensor or the like.

According to the invention, the brake assembly further includes a stroke detector. The stroke detector is configured to enter its active state upon detecting a braking force, which may in particular manifest as strain or stress, or motion of the caliper and/or the actuator. The stroke detector unit activates the sensor device in the active state. In particular, the stroke detector may be configured to enter an active state when a braking action occurs. Preferably, the stroke detector is configured such that it senses a change of a stroking force and/or stroking movement of the actuator, the caliper attached thereto, and/or of one or more braking pads attached to the caliper. The stroke detector may be structurally designed such that it enters its active state after a minimal threshold of movement of one or more of the moving components of disk brake assembly, in particular the caliper, occurs.

Alternatively or additionally, the stroke detector may be designed such that it enters its active state when a minimal threshold force, such as minimal threshold deformation and/or minimal threshold stress acting at the actuator, at a predetermined point in the rigging and/or at least one a braking element is reached. It is particularly preferred that the stroke detector senses a braking action at the beginning thereof so that it can activate or turn on the sensor device such that the sensor device is capable to perform one or more measurements of one or more parameters during the braking action. The sensor device may preferably be triggered by the stroke detector such that one or more measurements of one or more parameters of the brake assembly can be taken while a maximal braking force acts and/or a maximal dislocation of the braking elements during the braking action occurs. In particular, the stroke detector may have a passive state (off) in which the stroke detector leaves the sensor device idle or turns the sensor device off.

In a particular embodiment of the brake assembly, the stroke detector is configured to enter its active state upon detecting displacement of a first moveable component of the disk brake assembly, in particular of the caliper, for example a first caliper arm, in relation to a second component of the disk brake assembly, particularly in relation to the piston actuator. The second component of the brake disk assembly may be a moveable or a stationary assembly component. A stationary component may be firmly attached to or part of the rail car chassis. A moveable component may be the caliper, for example a second caliper arm.

According to the invention, the stroke detector is connected to the piston actuator, in particular rigidly attached to the piston actuator. The stroke detector may be rigidly attached to one or two sections of the piston actuator. In particular, the stroke detector may be rigidly attached to at least one or two of a plate, a bellow, a housing section, a spring, or rod of the piston actuator. The stroke detector may comprise several parts moveable with respect to one another which may be rigidly attached to a respective first or second piston actuator section, wherein the first and second piston actuator section are moveable with respect to one another.

In a further development of the disk brake assembly, the stroke detector includes a first component, in particular a stroke indicator, rigidly attached to a first particularly moveable section of the piston actuator. A first section may in particular be a plate, bellows or spring, for performing a rod motion associated with a piston motion.

In another further development of the disk brake assembly which may be combined with the aforementioned one, the stroke detector comprises a second component, in particular a switch, preferably a microswitch, preferably rigidly attached to a second particularly stationary section of the piston actuator. The second stationary or moveable section may be a housing. In particular, the switch comprises a preferably mechanically actuated relay for opening and/or closing an electronic circuit. The first and second section of the piston actuator are preferably moveable in relation to each other. Alternatively, the second section of the piston actuator may be a plate, bellows or spring, for performing a rod motion associated with a piston motion.

In an embodiment according to the aforementioned further developments, the stroke detector enters its active state when the first and second detector components engage one another, in particular when the stroke indicator engages the switch.

In one embodiment of a disk brake assembly that may be combined with the aforementioned, the sensor device includes a brake caliper position sensor in particular for determining a position of a first component of the brake caliper in relation to a second component of the brake caliper. The caliper position sensor may for example measure a, particularly translational or rotational, position of a first arm in relation to a second arm, wherein preferably the first and second component are directly linked to one another, for example via a joint and/or the brake regulator device.

In a further development of the disk brake assembly, the caliper comprises a brake regulator device. In particular, the disk brake assembly comprises no more than one brake regulator device for adjusting the caliper to the brake disk. In an embodiment comprising only one brake regulator device, said regulator device may preferably be attached directly to the piston actuator, wherein the assembly preferably contains only one position actuator.

Both the sensor device and the stroke detector may be attached to the brake regulator device. Thereby it can be achieved that the stroke detector is situated very close to the sensor device which it activates in the active state, wherein the sensor device may preferably be a sensor device for measuring a parameter related to the brake regulator device, such as a set distance dependent upon the current state of wear of one or more of the brake elements.

According to one embodiment of the disk brake assembly, the brake caliper position sensor is preferably only activated in the active state. The energy consumption of the sensor device can thereby be decreased substantially.

In one embodiment of a disk brake assembly that can be combined with the ones mentioned above, the sensor device includes a computing device and a data storage device, wherein the computing device is preferably only activated in the active state and wherein the computing device is configured to calculate a parameter indicating brake state, such as brake wear, in particular based on the measurement of the brake caliper position sensor, and to cause the transmitter to send the parameter indicating the brake state.

In a further development, the sensor device includes a piston actuator status sensor which is preferably only activated in the active state. Additionally or alternatively, the piston actuator status sensor comprises an actuator position sensor for measuring a piston position. The piston position may relate to one or more of the position of the piston in relation to a pneumatic or hydraulic chamber, a spring, a stationary bracket of the piston actuator, a moveable link for joining the piston actuator to the caliper.

According to a further development, the piston actuator status sensor comprises an actuator position sensor for measuring a piston position.

Additionally or alternatively, in one embodiment of the disk brake assembly, the sensor device includes a wireless transmitter for sending at least one parameter of the disk brake assembly in particular to a sensor hub of the rail car, wherein the wireless transmitter is preferably only activated in the active state. The wireless transmitter may be a Bluetooth or a WiFi Transmitter or any other type of wireless transmitter.

In the following, particular embodiments of the invention are described in more details the reference to the figures.
- Fig. 1: shows a perspective view of the disk brake according to the invention; and
- Fig. 2: shows a detailed sectional view of the disk brake according to Fig.1

For ease of intelligibility, the same or similar components are designated with the same or similar reference numerals in the following description of illustrations showing embodiments of the invention.

In the following description of exemplary embodiments of the invention as shown in the figures, the disk brake assembly according to the invention is generally designated with the reference numeral 1. The disk brake assembly 1 includes as its main constituents brake pads 15, 16, an actuator 13 for driving the brake pads 15, 16, the caliper 5 for transferring a braking force from the actuator 13 to the brake pads 15, 16, at least one sensor device 8 and a stroke detector 9.

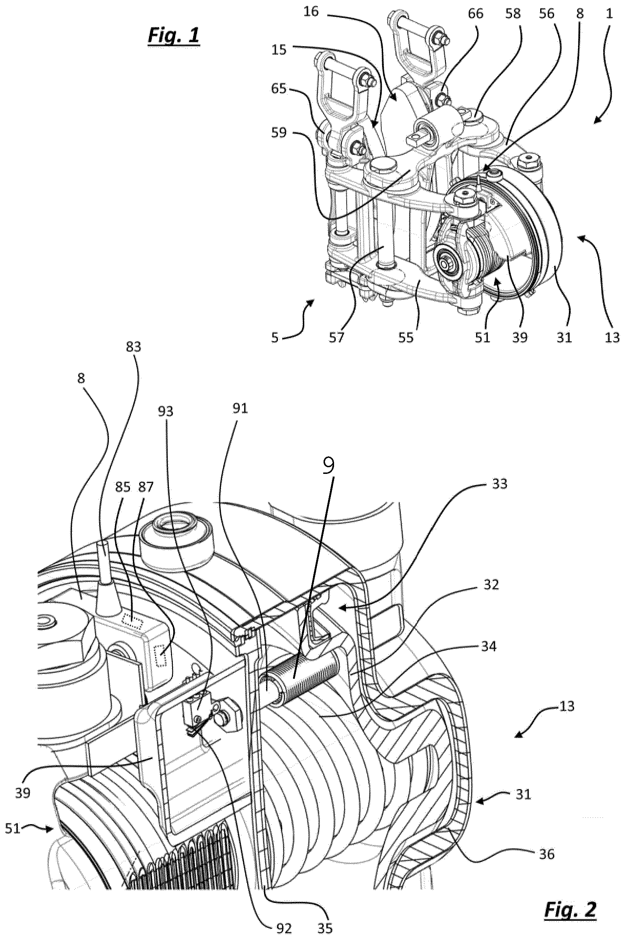

**Fig. 1 and Fig. 2** show an exemplary brake disk assembly 1. A pneumatic cylinder actuator 13 or so called brake cylinder may be attached to a rail car. The actuator 13 may be controlled to provide a mechanical force to the brake pads 15, 16 through the caliper 5.

The caliper 5 has two opposite arms 55, 56, each provided with a respective brake pad holder 65, 66 for holding at least one or several respective brake pads 15, 16. The caliper arms 55, 56 are connected to one another via one or more beams 59. Each caliper arm 55 or 56 is attached to the beam 59 via a hinge pin 57, 58. Each caliper arm 55 or 56 has a first end provided with a respective brake pad holder 65 or 66. Each caliper arm 55 or 56 has a second end opposite to the first end attached to the actuator 13. The second end of the first caliper arm 55 is fixed indirectly to the actuator 13 via the brake regulator device 51. The second end of the second caliper arm 56 is fixed directly to the actuator 13.

When the actuator 13 is supplied with a pressurized medium, it extends the distance between the caliper's 5 second ends so that the caliper arms 55, 56 perform a opposite rotating motion about the respective hinge pin 57, 58, to decrease the distance between the opposite brake pads 15, 16. Thereby, the brake pads 15, 16 may be pressed against opposite surfaces of a brake disk to enact a braking force onto a wheel or other rotor of a rail car (not shown in further detail).

The caliper 5 of the brake assembly 1 according to the invention in the illustrated embodiments includes a brake regulator device 51 realized as a so-called brake slack adjuster. The brake regulator device 51 is connected to and joined with the brake cylinder 13. The brake regulator device 51 is movably connected between the actuator 13 and the brake caliper 5 for transferring a braking force from the actuator 13 to one of caliper arms 55 and thereby to the brake pads 15, 16. The brake regulator device 51 may be configured to adjust the caliper 5 in accordance with a wear level of at least one brake pad 15, 16. Due to wear, the free distance between the brake pads 15, 16 and the corresponding brake disk of the rail car wheel increases (not shown in detail), and the brake regulator device 51 or brake slack adjuster can be configured to allow for the increase in free distance so that, regardless of the current state of wear of the brake pads 15, 16, a braking force provided by the actuator 13 always results in the same braking effect on rail car wheels.

The rail car may further be provided with one or more sensor devices 8 capable and configured for measuring at least one parameter of the brake assembly 1. In the present embodiment, a particular sensor device 8 including a caliper position sensor will be described in further detail below. The sensor device 8, as shown in detail in Fig. 2, may comprise several components such as a computing device 85, a data storage device 87 and a transmitter 83. The computing device 85 may cooperate with the data storage device 87 to store measurement data collected from a sensor, such as the caliper position sensor, and/or to store analysis functions. The computing device 85 may be configured to perform analysis functions on measurement data collected by the sensor in order to determine analysis data, particularly regarding brake wear.

The computing device 85 may further be configured to send and/or receive data via the transmitter 83. For example, the computing device 85 may be configured to send data related to measurement data and/or analysis a data via the transmitter 83. The transmitter 83 may comprise an antenna, such as a WiFi antenna or Bluetooth antenna. Data transmitted from the computing device 85 via the transmitter 83 may be received by a sensor hub of the rail car. A sensor hub of the rail car may be provided on the rail car and configured to communicate wire-bound or wireless with one or more sensor devices 8 (not shown in detail). A sensor hub may further be provided with communication means to communicate with one or more remote systems, such as a cloud-based control and/or diagnosis system (not shown in detail).

The brake assembly 1 is provided with a stroke detector 9 that has a passive state (off) and an active state (on). The stroke detector 9 is configured to enter its active state when a brake assembly movement and/or a brake mechanism movement action occurs. The stroke detector 9 is activated at the beginning of a stroke of the actuator 13 to wake up the sensor unit 8 so that the sensor unit 8 may start a measurement during a braking action, particularly when full braking occurs. In the active state, the stroke detector 9 activates the sensor device 8. In the passive state, the stroke detector 9 is configured not to activate the sensor device 8. The stroke detector 9 may be configured to leave the sensor device 8 idle in the passive state, or to actively cause the sensor device 8 to enter an inactive state. In the present embodiment, the stroke detector 9 is configured to leave the sensor device 8 idle in the passive state of the stroke detector, so that in the passive state, the stroke detector 9 does not affect whether the sensor unit 8 remains activated, whether the sensor unit 8 changes from active to inactive, or whether the sensor unit 8 remains inactive. For example, the sensor unit 8 can be configured to wake up regardless of an activation by the stroke detector 9, for instance in a regular interval such as every 30 minutes. In a preferred embodiment, the sensor unit 8, the caliper position sensor, the computing device 85 and/or the transmitter 83 may be configured to wake up in correspondence to at least one triggering event in addition to the activation by the stroke detector 9, such as timed triggering event.

The computing device 83 may be configured to perform at least one of the following actions upon having been activated by the stroke detector 9: (i) conduct one or more measurements with a sensor, (ii) perform one or more analysis functions based on the measurement(s), and/or (iii) send measurement data and/or analysis data via the transmitter 83.

In the present embodiment, the sensor device 8 may be configured to turn itself inactive, for example enter a sleep mode or an off mode, after a predetermined time and/or after having performed one or more predetermined actions. The computing device 83 may be configured to turn the sensor device 8 inactive again after performing at least one of the above-mentioned actions (i), (ii), and/or (iii). Alternatively or additionally, the computing device 83 may be configured to run a timer for a predetermined amount of time, such as 20 seconds, before turning the sensor device 8 inactive again.

In the present embodiment shown in Figs. 1 and 2, the sensor device 8 and the stroke detector 9 are attached to the brake regulator device 51 and the actuator 13. The stroke detector 9 is configured to detect any relative movement of the first actuator 13. When the relative movement of actuator components relative to one another occurs, the stroke detector 9 enters its active state. In the active state, the stroke detector 9 activates the sensor unit 8.

The actuator 13 will, and a reference to the embodiment shown in Fig. 2, be described as a pneumatic actuator 13. However, it shall be understood that the actuator might alternatively be a hydraulic actuator using a hydraulic fluid instead of up pneumatic fluid as the actuator medium. The actuator 13 or brake cylinder comprises a housing 31 consisting of a top shell 36 and a bottom shell 35. The top shell 36 is coupled to the first caliper arm 56. The top shell 36 and the bottom shell 35 encapsulate an interior space which is pneumatically divided by a membrane 32 into a medium chamber 33 for receiving the actuator fluid and a second chamber containing a spring 34. The membrane 32 is configured to move towards the top shell 36 or towards the bottom shell 35 dependent upon the equilibrium of forces acting on to the membrane 32 through the opposing biasing force of the spring 32 and the pneumatic pressure acting in the medium chamber 33. An actuator rod is firmly attached to the membrane 32 to experience the same movement as the membrane 32.

Thus, when the pressure force acting in the medium chamber 33 exceeds the biasing force of the spring 34, the actuator rod is forced to move away from the top shell 36 of the housing 31. The actuator rod extends through the housing bottom shell 35 and is firmly coupled to the brake regulator device 51. When the actuator rod is moved away from the top shell 36, the slack adjuster 51 is moved correspondingly. By increasing the actuating pressure in the medium chamber 33, the actuator 13 causes the second ends of the caliper arms 55, 56 to move apart from one another, thereby causing the brake pads 15, 16 attached to the first ends of the caliper arms 55, 56 to move towards one another, until the brake pads 15, 16 engage the brake disk to an act a braking force thereon.

The sensor unit 8 shown in detail in Fig. 2 includes a caliper position sensor (not shown in detail). The caliper position sensor is configured to detect the current setting of the brake regulator device 51. The caliper position sensor may measure the distance between an optical emitter or any other distance measuirng means of the sensor and a reflector attached to components of the regulator device 51 moveable with respect to one another. According to an alternative embodiment, which is not shown in detail, the sensor unit 8 may be provided with one or more ultrasonic position and/or distance sensors to determine a relative position of one component or distance between several components of the caliper 5, the actuator 13 and/or the brake regulator device 51.

For example at the end of the braking cycle and/or when the braking force reaches a maximum, the sensor unit 8 may make a measurement with the distance sensor to determine the distance from one end of the slack adjuster 51 to another. The computer device 83 may transmit the distance measurement to the sensor hub via the transmitter 83 so that wear of the brake pads 15, 16 can be calculated based on the distance measurement. The distance measurement and/or the corresponding brake wear can be transferred from the sensor hub to a server via satellite transmission or radio transmission, where they may be stored for further evaluation.

The stroke detector 9 is firmly attached to the actuator 13. The stroke detector 9 includes a stroke indicator 91 realized as a rod and movable in a translational direction m which may preferably be parallel to the axial direction of the regulator device 51 and/or brake cylinder 13. The stroke indicator 91 is firmly attached to the membrane 32 to experience the same movement thereof and/or to move in parallel with the brake rod. The stroke indicator Rod 91 extends from the membrane 32 into the second actuator chamber housing the spring 34 and through the bottom shell 35. A housing extension 39 may be attached to the bottom shell 35 to contain the section of the stroke indicator rod 91 outside of the actuator housing 31. The stroke indicator 91 is movable between a first position and a second position according to the displacement of the caliper and/or actuator 13 in case of a braking action. The rod 91 is in a first position while no braking action occurs and it is in a second position when a braking action occurs. Fig. 2 shows the rod 91 in the first position. The stroke indicator 91 may engage a mechanical switch 92 of a relay 93. The relay 93 is configured as a wake-up-switch for activating the sensor unit 8. In particular, the relay 93 may be configured so that the stroke detector 9 is in a passive state in which the switch 91 is depressed and enters and enters an active state once the switch 91 is released.

At the beginning of the braking action, the pressure in the medium chamber 33 is increased so as to move the membrane 32 and the stroke indicator 91 attached thereto. During the translational movement, the stroke indicator 91 is moved relative to the rod 54 so that the indicator rod 91 engages the switch 92 which is fixed stationary in regard to bottom shell 35 which causes switch 92 to activate the relay 93 to wake up the sensor unit 8.

Alternatively to the embodiment shown in figure 2, the stroke detector 9 might, instead of a microswitch 92 with a indicator rod 91, be provided with a pressure switch arranged inside of the medium chamber 33 or in fluid communication with the medium chamber 33. In a similar manner as described above, at the beginning of the braking action, when the pressure in the medium chamber 33 is increased, the increase in pressure can be detected by the pressure switch which may then cause the sensor unit 8 to wake up.

### LIST OF REFERENCE NUMERALS

- 1: disk brake assembly
- 3: rail car
- 5: caliper
- 8: sensor device
- 9: stroke detector
- 13: actuator
- 15, 16: brake pad
- 31: actuator housing
- 32: membrane
- 33: medium chamber
- 34: spring
- 35: bottom shell
- 36: top shell
- 39: housing extension
- 51: brake regulator device
- 55, 56: caliper arm
- 57, 58: hingepin
- 59: beam
- 65, 66: brake pad holder
- 83: transmitter
- 85: computing device
- 87: data storage device
- 91: stroke indicator
- 92: relay
- 93: switch

## Claims

1. Disk brake assembly (1) for a rail car, including
at least one pair of brake pads (15, 16) for pressing against opposite sides of a brake disk coupled to a rail car rotor;
a piston actuator (13) powered by a fluid for driving the disk brake assembly (1);
a caliper (5) for transferring a braking stroke from the actuator (13) to the brake pads (15, 16);
at least one sensor device (8) for measuring at least one parameter of the disk brake assembly (1), wherein
the disk brake assembly (1) further includes a stroke detector (9) having an active state in which the stroke detector (9) activates the sensor device (8);
wherein the stroke detector (9) is configured to enter its active state upon detecting a braking force or motion of the caliper (5) and/or the actuator (13) **characterized in that** the stroke detector (9) is connected to the piston actuator (13).

2. Disk brake assembly (1) according to claim 1, **characterized in that** the stroke detector (9) is configured to enter its active state upon detecting displacement of a first moveable component of the disk brake assembly (1) in relation to a second component of the disk brake assembly (1), particularly in relation to the piston actuator (13).

3. Disk brake assembly (1) according to claim 1 or 2, **characterized in that** the stroke detector (9) includes a stroke indicator (91) rigidly attached to a first particularly moveable section of the piston actuator (13) for performing a rod motion associated with a position motion.

4. Disk brake assembly (1) according to one of the preceding claims, **characterized in that** the stroke detector (9) comprises a switch (9), in particular a microswitch, attached to a second section of the piston actuator (13), wherein in particular the switch (92) comprises a preferably mechanically actuated relay (93) for opening and/or closing an electronic circuit.

5. Disk brake assembly (1) according to claims 3 and 4, **characterized in that** the stroke detector (9) enters its active state when the stroke indicator (91) engages the switch (92).

6. Disk brake assembly (1) according to one of the preceding claims, **characterized in that**, the sensor device (8) includes a caliper position sensor in particular for determining a position of a first component of the caliper in relation to a second component of the caliper.

7. Disk brake assembly (1) according claim 6, **characterized in that** the caliper (5) includes at least one brake regulator device (51) for adjusting the caliper (5) to the brake disk, wherein the brake regulator device (51) might be attached to the piston actuator (13); and wherein the caliper position sensor measures a position of the brake regulator device (51).

8. Disk brake assembly (1) according to one of the claims 6 or 7, **characterized in that** the caliper position sensor is only activated in the active state and/or by at least one triggering event.

9. Disk brake assembly (1) according to one of the claims 6 to 8, **characterized in that** the sensor device (8) includes a transmitter (83), a computing device (85) and a data storage device (87), wherein the computing device preferably only activated in the active state and/or by at least one triggering event, and wherein the computing device (85) is configured to calculate a parameter indicating a brake state, such as brake wear, in particular based on the measurement of the caliper position sensor and/or to cause the transmitter (83) to send the parameter indicating the brake state.

10. Disk brake (1) assembly according to one of the preceding claims, **characterized in that** the sensor device (8) includes a piston actuator status sensor which is preferably only activated in the active state and/or by at least one triggering event.

11. Disk brake assembly (1) according to claim 11, **characterized in that** the piston actuator status sensor comprises an actuator position sensor for measuring a piston position.

12. Disk brake assembly (1) according to one of the preceding claims, **characterized in that** the sensor device (8) includes a wireless transmitter (83) for sending at least one parameter of the disk brake assembly (1) in particular to a sensor hub (38) of the rail car, wherein the wireless transmitter (83) is preferably only activated in the active state and/or by at least one triggering event.

## Patentansprüche

1. Scheibenbremsanordnung (1) für ein Schienenfahrzeug, die Folgendes beinhaltet:
mindestens ein Paar Bremsbeläge (15, 16) zum Drücken gegen entgegengesetzte Seiten einer Bremsscheibe, die mit einem Rotor eines Schienenfahrzeugs gekoppelt ist;
eine von einem Fluid betriebene Kolbenbetätigungsvorrichtung (13) zum Antreiben der Scheibenbremsanordnung (1);
einen Bremssattel (5) zum Übertragen eines Bremshubs von der Betätigungsvorrichtung (13) auf die Bremsbeläge (15, 16);
mindestens eine Sensorvorrichtung (8) zum Messen mindestens eines Parameters der Scheibenbremsanordnung (1), wobei
die Scheibenbremsanordnung (1) weiter einen Hubdetektor (9) beinhaltet, der einen aktiven Zustand aufweist, in dem der Hubdetektor (9) die Sensorvorrichtung (8) aktiviert;
wobei der Hubdetektor (9) dazu konfiguriert ist, bei Erfassen einer Bremskraft oder Bewegung des Bremssattels (5) in seinen aktiven Zustand einzutreten, und/oder wobei die Betätigungsvorrichtung (13) **dadurch gekennzeichnet ist, dass** der Hubdetektor (9) mit der Kolbenbetätigungsvorrichtung (13) verbunden ist.

2. Scheibenbremsanordnung (1) nach Anspruch 1, **dadurch gekennzeichnet, dass** der Hubdetektor (9) dazu konfiguriert ist, bei Erfassen einer Verschiebung einer ersten bewegbaren Komponente der Scheibenbremsanordnung (1) in Bezug auf eine zweite Komponente der Scheibenbremsanordnung (1), insbesondere in Bezug auf die Kolbenbetätigungsvorrichtung (13) in seinen aktiven Zustand einzutreten.

3. Scheibenbremsanordnung (1) nach Anspruch 1 oder 2, **dadurch gekennzeichnet, dass** der Hubdetektor (9) einen Hubindikator (91) beinhaltet, der zum Durchführen einer einer Positionsbewegung zugeordneten Stangenbewegung starr an einem ersten, insbesondere bewegbaren Abschnitt des Kolbenbetätigungsvorrichtungs (13) angebracht ist.

4. Scheibenbremsanordnung (1) nach einem der vorstehenden Ansprüche, **dadurch gekennzeichnet, dass** der Hubdetektor (9) einen Schalter, insbesondere einen Mikroschalter, umfasst, der an einem zweiten Abschnitt der Kolbenbetätigungsvorrichtung (13) angebracht ist, wobei insbesondere der Schalter (92) ein bevorzugt mechanisch betätigtes Relais (93) zum Öffnen und/oder Schließen einer elektronischen Schaltung umfasst.

5. Scheibenbremsanordnung (1) nach den Ansprüchen 3 und 4, **dadurch gekennzeichnet, dass** der Hubdetektor (9) in seinen aktiven Zustand eintritt, wenn der Hubindikator (91) mit dem Schalter (92) in Eingriff kommt.

6. Scheibenbremsanordnung (1) nach einem der vorstehenden Ansprüche, **dadurch gekennzeichnet, dass** die Sensorvorrichtung (8) einen Bremssattel-Positionssensor insbesondere zum Bestimmen einer Position einer ersten Komponente des Bremssattels in Bezug zu einer zweiten Komponente des Bremssattels beinhaltet.

7. Scheibenbremsanordnung (1) nach Anspruch 6, **dadurch gekennzeichnet, dass** der Bremssattel (5) mindestens eine Bremsregelvorrichtung (51) zum Einstellen des Bremssattels (5) auf die Bremsscheibe beinhaltet, wobei die Bremsregelvorrichtung (51) an der Kolbenbetätigungsvorrichtung (13) angebracht sein könnte; und wobei der Bremssattel-Positionssensor eine Position der Bremsregelvorrichtung (51) misst.

8. Scheibenbremsanordnung (1) nach einem der Ansprüche 6 oder 7, **dadurch gekennzeichnet, dass** der Bremssattel-Positionssensor nur im aktiven Zustand und/oder durch mindestens ein auslösendes Ereignis aktiviert wird.

9. Scheibenbremsanordnung (1) nach einem der Ansprüche 6 bis 8, **dadurch gekennzeichnet, dass** die Sensorvorrichtung (8) einen Sender (83), eine Rechenvorrichtung (85) und eine Datenspeichervorrichtung (87) beinhaltet, wobei die Rechenvorrichtung bevorzugt nur im aktiven Zustand und/oder durch mindestens ein auslösendes Ereignis aktiviert wird, und wobei die Rechenvorrichtung (85) dazu konfiguriert ist, einen Parameter zu berechnen, der einen Bremszustand, wie Bremsverschleiß, insbesondere basierend auf der Messung des Bremssattel-Positionssensors angibt und/oder den Sender (83) zu veranlassen, den Parameter, der den Bremszustand angibt, zu senden.

10. Scheibenbremsanordnung (1) nach einem der vorstehenden Ansprüche, **dadurch gekennzeichnet, dass** die Sensorvorrichtung (8) einen Kolbenbetätigungsvorrichtung-Statussensor beinhaltet, der bevorzugt nur im aktiven Zustand und/oder durch mindestens ein auslösendes Ereignis aktiviert wird.

11. Scheibenbremsanordnung (1) nach Anspruch 11, **dadurch gekennzeichnet, dass** der Kolbenbetätigungsvorrichtung-Statussensor einen Positionssensor für die Betätigungsvorrichtung zum Messen einer Kolbenposition umfasst.

12. Scheibenbremsanordnung (1) nach einem der vorstehenden Ansprüche, **dadurch gekennzeichnet, dass** die Sensorvorrichtung (8) einen drahtlosen Sender (83) zum Senden mindestens eines Parameters der Scheibenbremsanordnung (1) insbesondere an einen Sensor-Hub (38) des Schienenfahrzeugs beinhaltet, wobei der drahtlose Sender (83) bevorzugt nur im aktiven Zustand und/oder durch mindestens ein auslösendes Ereignis aktiviert wird.

## Revendications

1. Ensemble frein à disque (1) pour un véhicule ferroviaire, incluant
au moins une paire de plaquettes de frein (15, 16) pour appuyer contre les côtés opposés d'un disque de frein couplé à un rotor de véhicule ferroviaire ;
un actionneur à piston (13) alimenté par un fluide pour entraîner l'ensemble frein à disque (1) ;
un étrier (5) pour transférer une course de freinage de l'actionneur (13) aux plaquettes de frein (15, 16) ;
au moins un dispositif capteur (8) pour mesurer au moins un paramètre de l'ensemble frein à disque (1) ; dans lequel
l'ensemble frein à disque (1) inclut en outre un détecteur de course (9) présentant un état actif dans lequel le détecteur de course (9) active le dispositif capteur (8) ;
dans lequel le détecteur de course (9) est configuré pour entrer dans son état actif lors de la détection d'une force de freinage ou d'un mouvement de l'étrier (5) et/ou de l'actionneur (13) **caractérisé en ce que** le détecteur de course (9) est relié à l'actionneur à piston (13).

2. Ensemble frein à disque (1) selon la revendication 1, **caractérisé en ce que** le détecteur de course (9) est configuré pour entrer dans son état actif lors de la détection d'un déplacement d'un premier composant mobile de l'ensemble frein à disque (1) par rapport à un second composant de l'ensemble frein à disque (1), en particulier par rapport à l'actionneur à piston (13).

3. Ensemble frein à disque (1) selon la revendication 1 ou 2, **caractérisé en ce que** le détecteur de course (9) inclut un indicateur de course (91) fixé de manière rigide à une première section particulièrement mobile de l'actionneur à piston (13) pour effectuer un mouvement de tige associé à un mouvement de position.

4. Ensemble frein à disque (1) selon l'une des revendications précédentes, **caractérisé en ce que** le détecteur de course (9) comprend un commutateur (9), en particulier un microcommutateur, fixé à une seconde section de l'actionneur à piston (13), dans lequel, en particulier, le commutateur (92) comprend un relais (93) de préférence actionné mécaniquement pour ouvrir et/ou fermer un circuit électronique.

5. Ensemble frein à disque (1) selon les revendications 3 et 4, **caractérisé en ce que** le détecteur de course (9) entre dans son état actif lorsque l'indicateur de course (91) vient en prise avec le commutateur (92).

6. Ensemble frein à disque (1) selon l'une des revendications précédentes, **caractérisé en ce que**le dispositif capteur (8) inclut un capteur de position d'étrier, en particulier pour déterminer une position d'un premier composant de l'étrier par rapport à un second composant de l'étrier.

7. Ensemble frein à disque (1) selon la revendication 6, **caractérisé en ce que** l'étrier (5) inclut au moins un dispositif régulateur de frein (51) pour ajuster l'étrier (5) par rapport au disque de frein, dans lequel le dispositif régulateur de frein (51) peut être fixé à l'actionneur à piston (13) ; et dans lequel le capteur de position d'étrier mesure une position du dispositif régulateur de frein (51).

8. Ensemble frein à disque (1) selon l'une des revendications 6 ou 7, **caractérisé en ce que** le capteur de position d'étrier est activé uniquement à l'état actif et/ou par au moins un événement déclencheur.

9. Ensemble frein à disque (1) selon l'une des revendications 6 à 8, **caractérisé en ce que** le dispositif capteur (8) inclut un émetteur (83), un dispositif informatique (85) et un dispositif de stockage de données (87), dans lequel le dispositif informatique (85) est, de préférence, activé uniquement à l'état actif et/ou par au moins un événement déclencheur, et dans lequel le dispositif informatique (85) est configuré pour calculer un paramètre indiquant un état de frein, tel qu'une usure de frein, en particulier sur la base de la mesure du capteur de position d'étrier et/ou pour amener l'émetteur à envoyer le paramètre indiquant l'état de frein.

10. Ensemble frein à disque (1) selon l'une des revendications précédentes, **caractérisé en ce que** le dispositif capteur (8) inclut un capteur d'état d'actionneur à piston qui est activé, de préférence, uniquement dans l'état actif et/ou par au moins un événement déclencheur.

11. Ensemble frein à disque (1) selon la revendication 11, **caractérisé en ce que** le capteur d'état d'actionneur à piston comprend un capteur de position d'actionneur pour mesurer une position de piston.

12. Ensemble frein à disque (1) selon l'une des revendications précédentes, **caractérisé en ce que** le dispositif capteur (8) inclut un émetteur sans fil (83) pour envoyer au moins un paramètre de l'ensemble frein à disque (1) en particulier à un concentrateur de capteurs (38) du véhicule ferroviaire, dans lequel l'émetteur sans fil (83) est, de préférence, activé uniquement dans l'état actif et/ou par au moins un événement déclencheur.
